# EUROPEAN PATENT SPECIFICATION

(11) **EP 1 705 777 B1**
(45) Date of publication and mention of the grant of the patent: **09.12.2009**
(21) Application number: 06005103.4
(22) Date of filing: 13.03.2006
(51) Int. Cl.: H02K 5/00

(54) **Automotive alternator having reliable mounting structure**
Kraftfahrzeuggenerator mit einer zuverlässigen Montagevorrichtung
Alternateur de véhicule ayant un dispositif de montage fiable

(30) Priority: 23.03.2005 JP 2005083563
(43) Date of publication of application: 27.09.2006
(73) Proprietor: DENSO CORPORATION, Kariya-city, Aichi-pref. 448-8661 (JP)
(72) Inventor: Egawa, Kenichi c/o Denso Corporation, Kariya-city Aichi-pref., 448-8661 (JP)
(74) Representative: Kuhnen & Wacker

(56) References cited:
- EP-A2- 0 310 068
- WO-A-82/03735
- DE-U1- 9 301 825
- FR-A1- 2 522 213
- FR-A1- 2 575 252
- FR-A3- 2 656 748

## Description

### BACKGROUND OF THE INVENTION

### 1 Technical Field of the Invention

The present invention relates fixtures for fixing together different members. More particularly, the invention relates to fixture which can be employed with an automotive alternator and a mount of an automobile which results an improved mounting structure that ensures reliable mounting of the alternator to an automobile.

### 2 Description of the Related Art

A conventional mounting structure for mounting an automotive alternator to an automobile is disclosed, for example, in Japanese Patent First Publication No. H08 - 205464.

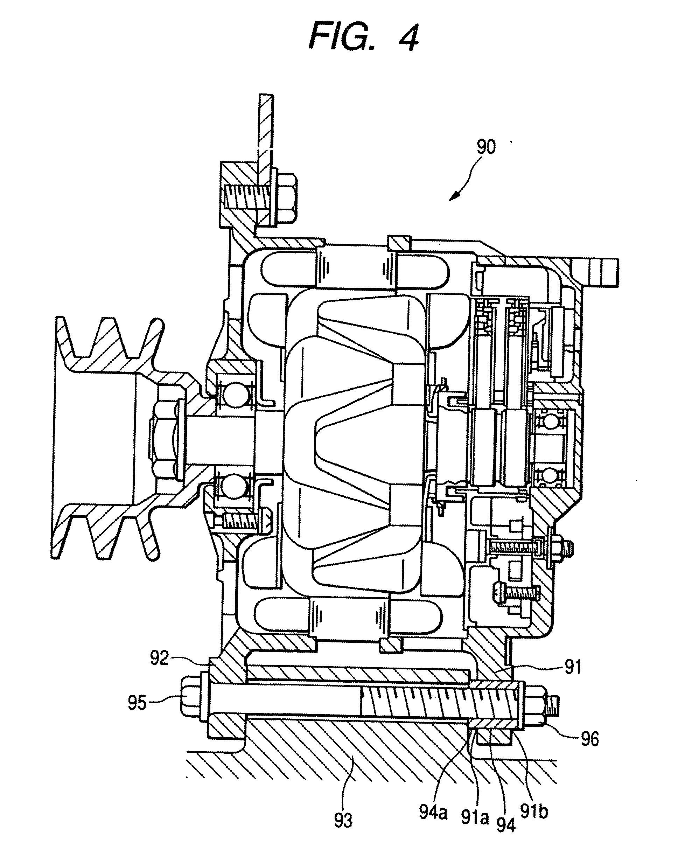

Referring to FIG. 4, in the mounting structure, a first stay 91 of the automotive alternator 90 has a through-bore that has first and second open ends 91a and 91b opposite to each other. A second stay 92 of the automotive alternator 90 faces the first open end 91a of the through-bore of the first stay 91 and is spaced from the first stay 91 a given distance to interpose a mount 93 of the automobile between the first and second stays 91 and 92. A cylindrical bush 94 is press-fitted in the through-bore of the first stay 91. Moreover, the second stay 92, the mount 93, and the bush 94 each have a through-bore extending in the same direction as the through-bore of the first stay 91.

With such a structure, to mount the automotive alternator 90 to the mount 93, a bolt 95 is passed through the through-bores of the second stay 92, the mount 93, and the bush 94 in the direction from the first open end 91a to the second open end 91b of the through-bore of the first stay 91 and then wrenched to engage with a nut 96 at outside of the second open end 91b. The engagement between the bolt 95 and the nut 96 produces a force to move the bush 94 in the direction from the second end 91 b to the first end 91 a of the through-bore of the first stay 91. By the force, an end portion 94a of the bush 94 is protruded from the first open end 91 a of the through-bore of the first stay 91 to nip the mount 93 between the end portion 94a and the second stay 92, thereby mounting the automotive alternator 90 to the mount 93 of the automobile.

However, in the above mounting structure, the bush 94 has, as shown in FIG. 4, a constant outer diameter over its entire axial length. Consequently, the outer surface of the end portion 94a of the bush 94 may be injured during the initial press-fitting of the bush 94 into the through-bore of the first stay 91 and movement thereof through the through-bore to nip the mount 93.

Moreover, since the end portion 94a of the bush 94 is usually used in exposed condition, it is generally coated for the purpose of rust prevention. However, injuring the outer surface of the end portion 94a may cause the anti-rust coat of the end portion 94a to be separated from the base material of the same, thereby causing rust on the base material. Further, with progress of the rust, the strength of the end portion 94a will be decreased, thus weakening the nipping force of the end portion 94a against the mount 93. Consequently, it becomes impossible to securely mount the automotive alternator 90 to the mount 93 of the automobile.

In addition, since the end portion 94a of the bush 94 is usually visible, injuring the outer surface of the end portion 94a will mar the appearance of the end portion 94a and thus that of the entire automotive alternator 90.

Further relevant prior art is disclosed in FR-A1-2 522 213, WO 82/03735 A, DE 93 01 825 U1 and FR-A1-2 575 252.

### SUMMARY OF THE INVENTION

The present invention has been made in view of the above-mentioned problems.

It is therefore an object of the present invention to provide a reliable fixture with which two different members, such as an automotive alternator and a mount of an automobile, can be securely fixed together.

According to an aspect of the present invention, a fixture for fixing together two different members is provided which includes a first stay, a second stay, and a bush.

The first stay is configured to be fixed to a first member. The first stay has a through-bore that has first and second open ends opposite to each other.

The second stay is configured to be fixed to the first member such that the second stay faces the first open end of the through-bore of the first stay and is spaced from the first stay a given distance to interpose a second member between the first and second stays.

The bush is press-fitted in the through-bore of the first stay. The bush has a press-fit portion and an end portion. The press-fit portion is press-fit with an inner wall of the first stay defining the through-bore. The end portion is configured to be protruded from the first open end of the through-bore of the first stay by a force so as to nip the second member, which is interposed between the first and second stays, between the end portion and the second stay, thereby fixing the first member to the second member. The end portion is so shaped to keep free from interference with the inner wall of the first stay, thereby preventing a surface of the end portion from being injured during movement of the end portion through the through-bore of the first stay.

The above fixture is advantageous especially when the end portion of the bush is coated for rust prevention.

In the above fixture, it is preferable that the end portion of the bush has a predetermined length such that when the end portion is protruded from the first open end of the through-bore of the first stay to nip the mount, part of the end portion remains in the through-bore of the first stay.

In the above fixture, it is preferable that the press-fit portion of the bush has a cylindrical shape. It is further preferable that the end portion of the bush also has a cylindrical shape and a smaller outer diameter than the press-fit portion of the bush. It is still preferable that the bush has a frustoconical intermediate portion that connects the press-fit portion and the end portion.

In the above fixture, the second stay and the second member each may have a through-bore and the bush may have a female-threaded bore formed therein; the force to protrude the end portion of the bush may be created by passing a bolt through the through-bores of the second stay and the second member in a direction from the first open end to the second open end of the through-bore of the first stay and wrenching the bolt to engage with the female-threaded bore in the bush. Further, the above fixture may preferably further include a rotation restriction mechanism that works to restrict rotation of the bush. Specifically, the rotation restriction mechanism may be composed of a non-cylindrical end portion of the bush, which is opposite to the end portion of the bush and positioned outside of the second open end of the through-bore of the first stay, and a protrusion of the first stay which is formed in proximity to the second open end of the through-bore of the first stay to stop rotation of the non-cylindrical end portion of the bush.

Otherwise, in the above fixture, the second stay, the second member, and the bush each may have a through-bore; the force to protrude the end portion of the bush may be created by passing a bolt through the through-bores of the second stay, the second member, and the bush in a direction from the first open end to the second open end of the through-bore of the first stay and wrenching the bolt to engage with a nut at outside of the through-bore of the bush. Further, the first stay may preferably have a protrusion formed in proximity to the second open end of the through-bore of the first stay to stop rotation of the nut.

Consequently, through providing the above fixture employable in an alternator to fix it to a mount of an automobile, the objects of the present invention are achieved.

### BRIEF DESCRIPTION OF THE DRAWINGS

The present invention will be understood more fully from the detailed description given hereinafter and from the accompanying drawings of the preferred embodiment of the invention, which, however, should not be taken to limit the invention to the specific embodiment but are for the purpose of explanation and understanding only.

In the accompanying drawings:
FIG. 1 is a side elevation of an automotive alternator according to an embodiment of the invention;
FIG. 2 is a partially cross-sectional view illustrating a bush of the automotive alternator of FIG. 1;
FIG. 3 is a partially cross-sectional view illustrating the mounting of the automotive alternator of FIG. 1 to a mount of an automobile; and
FIG. 4 is a partially cross-sectional view illustrating a conventional mounting structure for mounting an automotive alternator to a mount of an automobile.

### DESCRIPTION OF THE PREFERRED EMBODIMENT

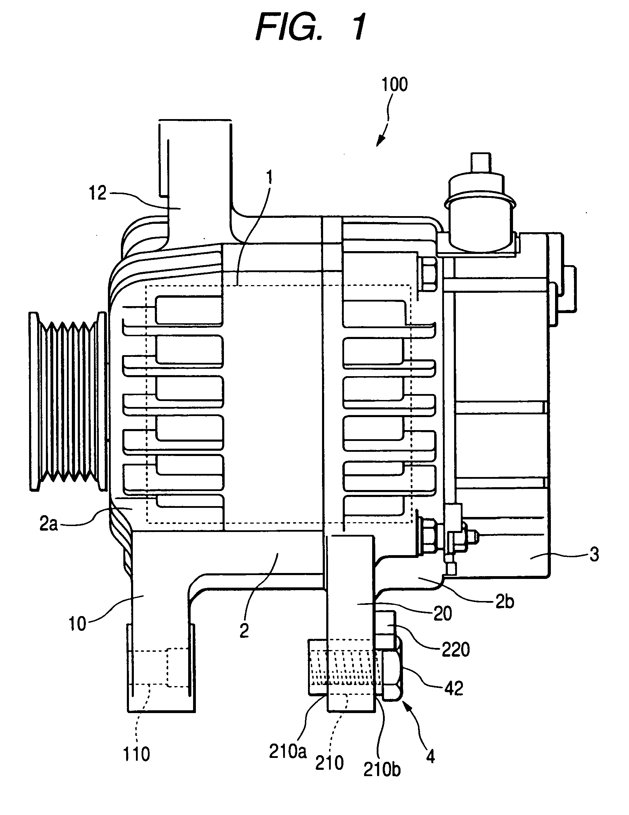

The preferred embodiment of the present invention will be described hereinafter with reference to FIGS. 1-3.

It should be noted that, for the sake of clarity and understanding, identical components having identical functions have been marked, where possible, with the same reference numerals in each of the figures.

FIG.1 shows the overall structure of an automotive alternator 100 according to an embodiment of the present invention.

As shown in FIG. 1, the automotive alternator 100 includes an electric power generating unit 1, a frame 2, and a rear cover 3.

The electric power generating unit 1 is configured to generate an AC power. The electric power generating unit 1 may be of any type known in the art. For example, the electric power generating unit 1 may be configured with a rotor (not shown) working to create a rotating magnetic field and a stator (not shown) working to produce a three-phase AC power in the rotating magnetic field.

The frame 2 is composed of a front frame 2a and a rear frame 2b, which are connected to one anther. The frame 2 accommodates and supports the electric power generating unit 1.

The rear cover 3 covers accessories (not shown) of the automotive alternator 100, which are mounted to a rear end wall of the rear frame 2b, to protect them. The accessories may include a rectifier, which works to convert the AC power generated by the electric power generating unit 1 into a DC power, a brush assembly for providing a field current to the electric power generating unit 1, and a voltage regulator that works to regulate an output voltage of the automotive alternator 100.

The automotive alternator 100 further includes, as shown in FIG. 1, three stays 10, 12, and 20, which are integrally formed with the frame 2. Specifically, the stays 10 and 12 are formed on the outer periphery of the front frame 2a, while the stay 20 is formed on the outer periphery of the rear frame 2b.

The stays 10 and 20 have the same angular (or circumferential) position and are spaced from each other a given distance in the axial direction, so as to interpose and nip a mount of an automobile therebetween. The stays 10 and 20 respectively have through-bores 110 and 210, which are substantially concentric with each other. In addition, the through-bore 210 of the stay 20 has first and second open ends 210a and 210b that are opposite to each other.

On the other hand, the stay 12 is spaced about 180 degrees from the stay 10 in the circumferential direction. The stay 12 is provided to adjust the mounting angle of the automotive alternator 100 with respect to an engine that drives the automotive alternator 100 via a belt, thereby adjusting the tension of the belt. (With regard to such a stay 12, a further reference can be made to Japanese Patent First Publication No. H08 - 205464 .)

A bush 4 is further included in the automotive alternator 100, which is press-fitted in the through-bore 210 of the stay 20.

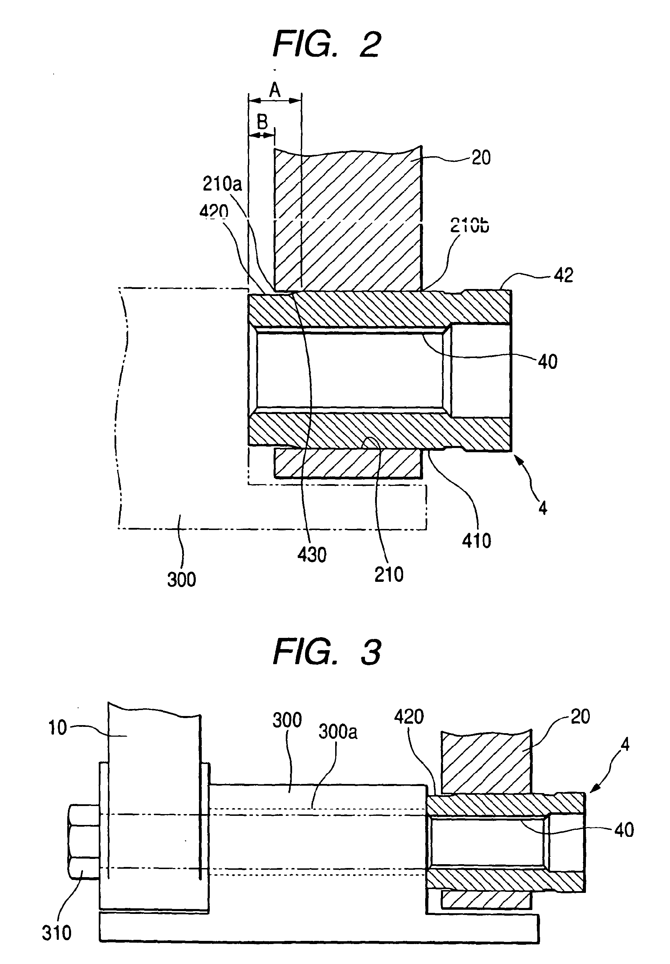

Specifically, referring to FIG.2, the bush 4 has a press-fit portion 410, an end portion 420, and an intermediate portion 430 between the press-fit portion 410 and the end portion 420. The press-fit portion 410 has a cylindrical shape and is press-fit with the inner wall of the stay 20 defining the through-bore 210. The end portion 420 also has a cylindrical shape and is positioned in proximity to the first open end 210a of the through-bore 210 of the stay 20. Further, according to the present invention, the end portion 420 has a smaller outer diameter than the press-fit portion 410. The intermediate portion 430 has a frustoconical shape so as to smoothly connect the press-fit portion 410 to the end portion 420.

It should be noted that, when the bush 4 was initially press-fitted into the through-bore 210 of the stay 20 in the direction from the second open end 210b to the first open end 210a, the intermediate portion 430 functioned as a guide to make the press-fitting smooth. Without such an intermediate portion 430, the inner wall of the stay 20 defining the through-bore 210 might be injured, during the press-fitting, by the boundary of the two portions 410 and 420 which have different outer diameters.

Further, the end portion 420 of the bush 4 is coated for rust prevention. The anti-rust coat of the end portion 420 is formed by plating in the present embodiment; however, it may also be formed by other methods, such as applying or spraying an anti-rust paint on a base material of the end portion 420. On the other hand, the press-fit portion 410 is not coated for reducing the friction between the outer surface of the press-fit portion 410 and the inner wall of the stay 20 defining the through-bore 210.

In addition, in a specific example of manufacturing the bush 4, both the press-fit portion 410 and the end portion 420 are coated first, and then only the coat of the press-fit portion 410 is removed by grinding.

In the present embodiment, the bush 4 further has a female-threaded bore 40 formed therein, which is substantially concentric with the through-bore 210 of the stay 20. The bush 4 also has a hexagonal end portion 42, which is opposite to the end portion 420 in the axial direction and positioned outside of the second open end 210b of the through-bore 210 of the stay 20. On the other hand, referring again to FIG. 1, the stay 20 has a protrusion 220, which is formed in close proximity to the second open end 210b of the through-bore 210 and faces at least one side face of the hexagonal end portion 42 of the bush 4. The hexagonal portion 42 of the bush 4 and the protrusion 220 of the stay 20 together make up a rotation restriction mechanism to restrict rotation of the bush 4.

Having described the overall structure of the automotive alternator 100, mounting thereof to a mount 300 of an automobile will be described below with reference to FIG. 3.

First, the mount 300, which has a through-bore 300a formed therein, is interposed between the stays 10 and 20.

Then, a bolt 310 is passed through the through-bore 110 of the stay 10 and the through-bore 300a of the mount 300 in the axial direction from the stay 10 to the stay 20.

After that, the bolt 310 is wrenched to engage with the female-threaded bore 40 of the bush 4.

The engagement between the bolt 310 and the female-threaded bore 40 of the bush 4 creates a force to move the bush 4 in the axial direction from the stay 20 to the stay 10.

By the force, the end portion 420 of the bush 4 is protruded from the first open end 210a of the through-bore 210 of the stay 20 to nip the mount 300 between the end portion 420 and the stay 10, thereby mounting the automotive alternator 100 to the mount 300.

It should be noted that, during the wrenching of the bolt 310, the hexagonal end portion 42 of the bush 4 is brought into pressed-contact with the protrusion 220 of the stay 20, thereby stopping rotation of the bush 4 along with the bolt 310.

In addition, referring again to FIG. 2, when the mount 300 is nipped between the stays 10 and 20, there is a dimensional relationship of A > B. Here, A represents the sum of axial lengths of the end portion 420 and the intermediate portion 430, while B represents the axial distance between the mount 300 and the stay 20. That is to say, when the automotive alternator 100 is mounted to the mount 300, all the part of the bush 4 exposed from the first open end 210a of the through-bore 210 of the stay 20 has a smaller outer diameter than the press-fit portion 410.

The above-described automotive alternator 100 according to the present embodiment has the following advantages.

In the automotive alternator 100, the bush 4 is so configured to have the press-fit portion 410, which is press-fit with the inner wall of the stay 20 defining the through-bore 210, and the end portion 420 that has a smaller outer diameter than the press-fit portion 410.

With such a configuration, the end portion 420 is kept free from interference with the inner wall of the stay 20 during the initial press-fitting of the bush 4 into the through-bore 210 of the stay 20 and movement thereof through the through-bore 210 to nip the mount 300.

Consequently, the outer surface of the end portion 420 is prevented from being injured by friction which otherwise exists between the outer surface of the end portion 420 and the inner wall of the stay 20.

Especially, when the end portion 420 is coated for rust prevention as in the present embodiment, the anti-rust coat is accordingly prevented from being separated from the base material of the end portion 420, thereby protecting the end portion 420 from rust.

In the automotive alternator 100, the stays 10 and 20 are integrally formed with the frame 2.

Consequently, the number of parts of the automotive alternator 100 is reduced, thereby minimizing the manufacturing cost and simplifying the mounting procedure of the automotive alternator 100.

In the automotive alternator 100, after the mounting of the automotive alternator 100 to the mount 300, all the part of the bush 4 exposed from the first open end 210a of the through-bore 210 of the stay 20 has a smaller outer diameter than the press-fit portion 410 (i.e., A > B).

Consequently, all the part of the outer surface of the bush 4 exposed from the through-bore 210 of the stay 20 is prevented from being injured, thereby more reliably protecting the bush 4 from rust.

In the automotive alternator 100, both the press-fit portion 410 and the end portion 420 of the bush 4 have a cylindrical shape.

Consequently, the bush 4 can be easily machined and press-fitted into the through-bore 210 of the stay 20.

In the automotive alternator 100, there is provided the frustoconical intermediate portion 430 between the press-fit portion 410 and the end portion 420 of the bush 4.

With the intermediate portion 430, the press-fitting of the bush 4 into the through-bore 210 of the stay 20 has been made smooth without injuring the inner wall of the stay 20 defining the through-bore 210.

In the automotive alternator 100, the force to move the bush 4 to nip the mount 300 is created by the engagement between the bolt 310 and the female-threaded bore 40 of the bush 4.

Consequently, the automotive alternator 100 can be easily mounted to the mount 300.

In the automotive alternator 100, there is provided the rotation restriction mechanism to restrict rotation of the bush 4, which is composed of the hexagonal end portion 42 of the bush 4 and the protrusion 220 of the stay 20.

Consequently, it becomes possible to stop rotation of the bush 4 during wrenching of the bolt 310, thereby ensuring reliable mounting of the automotive alternator 100 to the mount 300.

While the above particular embodiment of the invention has been shown and described, it will be understood by those who practice the invention and those skilled in the art that various modifications, changes, and improvements may be made to the invention without departing from the spirit of the disclosed concept.

For example, in the previous embodiment, both the press-fit portion 410 and the end portion 420 of the bush 4 have a cylindrical shape.

However, the two portions 410 and 420 may have other shapes, such as a quadratic prism shape. In this case, for keeping the outer surface of the end portion 410 free from interference with the inner wall of the stay 20, it is necessary that the length of sides of the end portion 420 is less than that of the press-fit portion 410.

In the previous embodiment, the end portion 420 has a hexagonal prism shape for making up the rotation restriction mechanism.

However, it may have any other non-cylindrical shape, such as a quadratic prim shape.

In the previous embodiment, the force to move the bush 4 to nip the mount 300 is created by the engagement between the bolt 310 and the female-threaded bore 40 of the bush 4.

However, the bush 4 may also be configured to have, instead of the female-threaded bore 40, a through-bore that has an inner diameter greater than the outer diameter of the bolt 310. In this case, the force to move the bush 4 to nip the mount 300 can be created by passing the bolt 310 further through the through-bore of the bush 4 and wrenching it to engage a nut at outside of the through-bore of the bush 4.

In the previous embodiment, the automotive alternator 100 is provided which includes a fixture for fixing it to the mount 300. The fixture can be considered as being made up of the stays 10 and 20 and the bush 4.

However, such a fixture may also be applied to fix together any other two different members.

Such modifications, changes, and improvements within the skill of the art are intended to be covered by the appended claims.

## Claims

1. A fixture for fixing together two different members, comprising:
a first stay (20) configured to be fixed to a first member, the first stay (20) having a through-bore (210) that has first and second open ends( 210a, 210b) opposite to each other;
a second stay (10) configured to be fixed to the first member such that the second stay (10) faces the first open end (210a) of the through-bore (210) of the first stay (20) and is spaced from the first stay (20) a given distance to interpose a second member between the first and second stays (10, 20); and
a bush (4) press-fitted in the through-bore (110) of the first stay (20), the bush (4) having a press-fit portion (410) and an end portion (420), the press-fit portion (410) being press-fit with an inner wall of the first stay (20) defining the through-bore, the end portion (420) being configured to be protruded from the first open end (210a) of the through-bore of the first stay (20) by a force so as to nip the second member, which is interposed between the first and second stays (10, 20), between the end portion (420) and the second stay (10), thereby fixing the first member to the second member,
**characterized in that** the end portion (420) of the bush (4) has a predetermined length such that when the end portion (420) is protruded from the first open end (210a) of the through-bore (210 of the first stay (20) to nip the second member, part of the end portion (420) remains in the through-bore of the first stay (20),
both the press-fit portion (410) and end portion (420) of the bush (4) are cylindrical in shape, and
the end portion (420) has smaller outer diameter than the press-fit portion (410) of the bush (4).

2. The fixture as set forth in Claim 1, wherein the end portion (420) of the bush (4) is coated for rust prevention.

3. The fixture as set forth in Claim 1, wherein the bush (4) has a frustoconical intermediate portion (430) that connects the press-fit portion (410) and the end portion (420).

4. The fixture as set forth in Claim 1, wherein the second stay (10) and the second member each have a through-bore (210, 300a) and the bush (4) has a female-threaded bore (40) formed therein, and wherein the force to protrude the end portion (420) of the bush (4) is created by passing a bolt (310) through the through-bores (210, 300a) of the second stay (10) and the second member in a direction from the first open end (210a) to the second open end (210b) of the through-bore (210) of the first stay (20) and wrenching the bolt (310) to engage with the female-threaded bore (40) in the bush (4).

5. The fixture as set forth in Claim 4 further comprising a rotation restriction mechanism (42, 220) that works to restrict rotation of the bush (4).

6. The fixture as set forth in Claim 5, wherein the rotation restriction mechanism (42, 220) is composed of a non-cylindrical end portion (42) of the bush (4), which is opposite to the end portion (420) of the bush (4) and positioned outside of the second open end (210b) of the through-bore (210) of the first stay (20), and a protrusion of the first stay (20) which is formed in proximity to the second open end (210b) of the through-bore (210) of the first stay (20) to stop rotation of the non-cylindrical end portion (42) of the bush (4).

7. The fixture as set forth in Claim 1, wherein the second stay (10), the second member, and the bush (4) each have a through-bore (210, 300a, 40), and wherein the force to protrude the end portion (420) of the bush (4) is created by passing a bolt (310) through the through-bores(210, 300a, 40) of the second stay (10), the second member, and the bush (4) in a direction from the first open end (210a) to the second open end (21 0b) of the through-bore (210) of the first stay (20) and wrenching the bolt (3 10) to engage with a nut at outside of the through-bore of the bush (4).

8. The fixture as set forth in Claim 7, wherein the first stay (20) has a protrusion formed in proximity to the second open end (210b) of the through-bore (210) of the first stay (20) to stop rotation of the nut.

9. The fixture as set forth in claim 1, wherein the fixture is employed in an automotive alternator (100) to mount the alternator to a mount (300) of an automobile, and
wherein
the first member, to which both the first and second stays (10, 20) are fixed, is a frame (2) of the alternator (100), and
the second member, which is to be fixed to the first member by the fixture, is the mount (300) of the automobile.

10. The fixture as set forth in claim 9, wherein both the first and second stays (20) are integrally formed with the frame (2).

## Patentansprüche

1. Befestigungsvorrichtung zum Fixieren von zwei unterschiedlichen Elementen, aufweisend:
eine erste Abstützung (20), die so konfiguriert ist, dass sie an einem ersten Element befestigt werden kann, wobei die erste Abstützung (20) eine Durchgangsbohrung (210) aufweist, die ein erstes und ein zweites offenes Ende (210a, 210b) aufweist, die einander gegenüberliegen;
eine zweite Abstützung (10), die so konfiguriert ist, dass sie an dem ersten Element befestigt werden kann, so dass die zweite Abstützung (10) dem ersten offenen Ende (210a) der Durchgangsbohrung (210) der ersten Abstützung (20) gegenüberliegt und von der ersten Abstützung (20) um einen gegebenen Abstand beabstandet ist, um ein zweites Element zwischen der ersten und der zweiten Abstützung (10, 20) anzuordnen; und
eine Buchse (4), die in die Durchgangsbohrung (110) der ersten Abstützung (20) eingepresst ist, wobei die Buchse (4) einen Presssitzbereich (410) und einen Endbereich (420) aufweist, wobei der Presssitzbereich (410) mit einer Innenwand der ersten Abstützung (20), die die Durchgangsbohrung definiert, in Presspassung versetzt wird, wobei der Endbereich (420) so konfiguriert ist, dass er durch eine Kraft aus dem ersten offenen Ende (210a) der Durchgangsbohrung der ersten Abstützung (20) herausragt, um so das zweite Element, das zwischen der ersten und der zweiten Abstützung (10, 20) angeordnet ist, zwischen dem Endbereich (420) und der zweiten Abstützung (10) zu erfassen, wodurch das erste Element an dem zweiten Element befestigt wird,
**dadurch gekennzeichnet, dass** der Endbereich (420) der Buchse (4) eine vorbestimmte Länge aufweist, so dass, wenn der Endbereich (420) aus dem ersten offenen Ende (210a) der Durchgangsbohrung (210) der ersten Abstützung (20) hervorsteht, um das zweite Element zu ergreifen, ein Teil des Endbereichs (420) in der Durchgangsbohrung der ersten Abstützung (20) verbleibt,
sowohl der Presssitzbereich (410) als auch der Endbereich (420) der Buchse (4) eine zylindrische Form aufweisen, und
der Endbereich (420) einen kleineren Außendurchmesser aufweist als der Presssitzbereich (410) der Buchse (4).

2. Befestigungsvorrichtung nach Anspruch 1, wobei der Endbereich (420) der Buchse (4) zu Rostschutzzwecken beschichtet ist.

3. Befestigungsvorrichtung nach Anspruch 1, wobei die Buchse (4) einen kegelstumpfförmigen Zwischenbereich (430) aufweist, der den Presssitzbereich (410) und den Endbereich (420) miteinander verbindet.

4. Befestigungsvorrichtung nach Anspruch 1, wobei die zweite Abstützung (10) und das zweite Element jeweils eine Durchgangsbohrung (210, 300a) aufweisen und die Buchse (4) eine Bohrung (40) mit einem darin ausgebildeten Innengewinde aufweist, und wobei die Kraft, die bewirkt, dass der Endbereich (420) der Buchse (4) hervorsteht, erzeugt wird, indem eine Schraube (310) durch die Durchgangsbohrungen (210, 300a) der zweiten Abstützung (10) geführt wird und das zweite Element in einer Richtung von dem ersten offenen Ende (210a) zu dem zweiten offenen Ende (210b) der Durchgangsbohrung (210) der ersten Abstützung (20) geführt wird und die Schraube (310) so angezogen wird, dass sie mit der mit einem Innengewinde versehenen Bohrung (40) in der Buchse in Eingriff gelangt.

5. Befestigungsvorrichtung nach Anspruch 4, ferner aufweisend einen Drehungsbeschränkungsmechanismus (42, 220), der dazu dient, eine Drehung der Buchse (4) zu beschränken.

6. Befestigungsvorrichtung nach Anspruch 5, wobei der Drehungsbeschränkungsmechanismus (42, 220) aus einem nichtzylindrischen Endbereich (42) der Buchse (4) besteht, die dem Endbereich (420) der Buchse (4) gegenüberliegt und außerhalb des zweiten offenen Endes (210b) der Durchgangsbohrung (210) der ersten Abstützung (20) positioniert ist, und einem Vorsprung der ersten Abstützung (20), der in der Nähe des zweiten offenen Endes (210b) der Durchgangsbohrung (210) der ersten Abstützung (20) ausgebildet ist, so dass eine Drehung des nichtzylindrischen Endbereichs (42) der Buchse (4) gestoppt wird.

7. Befestigungsvorrichtung nach Anspruch 1, wobei die zweite Abstützung (10), das zweite Element und die Buchse (4) jeweils eine Durchgangsbohrung (210, 300a, 40) aufweisen, und wobei die Kraft, die bewirkt, dass der Endbereich (420) der Buchse (4) hervorsteht, erzeugt wird, indem eine Schraube (310) durch die Durchgangsbohrungen (210, 300a, 40) der zweiten Abstützung (10), das zweite Element und die Buchse (4) in einer Richtung von dem ersten offenen Ende (210a) zu dem zweiten offenen Ende (210b) der Durchgangsbohrung (210) der ersten Abstützung (20) geführt wird und die Schraube (310) angezogen wird, um mit einer Mutter an der Außenseite der Durchgangsbohrung der Buchse (4) in Eingriff zu gelangen.

8. Befestigungsvorrichtung nach Anspruch 7, wobei die erste Abstützung (20) einen Vorsprung aufweist, der in der Nähe des zweiten offenen Endes (210b) der Durchgangsbohrung (210) der ersten Abstützung (20) ausgebildet ist, um eine Drehung der Mutter zu stoppen.

9. Befestigungsvorrichtung nach Anspruch 1, wobei die Befestigungsvorrichtung in einem Kraftfahrzeugs-Wechselstromgenerator (100) verwendet wird, um den Wechselstromgenerator an einer Halterung (300) eines Kraftfahrzeugs zu befestigen, und
wobei
es sich bei dem ersten Element, an dem sowohl die erste als auch die zweite Abstützung (10, 20) befestigt sind, um einen Rahmen (2) des Wechselstromgenerators (100) handelt, und
es sich bei dem zweiten Element, das durch die Befestigungsvorrichtung befestigt werden soll, um die Halterung (300) des Kraftfahrzeugs handelt.

10. Befestigungsvorrichtung nach Anspruch 9, wobei sowohl die erste als auch die zweite Abstützung (20) einstückig mit dem Rahmen (2) ausgebildet sind.

## Revendications

1. Dispositif pour fixer ensemble deux éléments différents, comprenant :
un premier montant (20) configuré pour être fixé à un premier élément, le premier montant (20) ayant un alésage traversant (210) qui a une première et une deuxième extrémités ouvertes (210a, 210b) opposées l'une à l'autre ;
un deuxième montant (10) configuré pour être fixé au premier élément de telle sorte que le deuxième montant (10) fait face à la première extrémité ouverte (210a) de l'alésage traversant (210) du premier montant (20) et est espacé du premier montant (20) d'une distance donnée pour interposer un deuxième élément entre le premier et le deuxième montants (10, 20) ; et
une douille (4) ajustée par pression dans l'alésage traversant (210) du premier montant (20), la douille (4) ayant une partie ajustée par pression (410) et une partie d'extrémité (420), la partie ajustée par pression (410) étant ajustée par pression avec une paroi intérieure du premier montant (20) définissant l'alésage traversant, la partie d'extrémité (420) étant configurée pour faire saillie de la première extrémité ouverte (210a) de l'alésage traversant du premier montant (20) par une force de façon à pincer le deuxième élément, qui est interposé entre le premier et le deuxième montants (10, 20), entre la partie d'extrémité (420) et le deuxième montant (10), fixant ainsi le premier élément au deuxième élément, **caractérisé en ce que**
la partie d'extrémité (420) de la douille (4) a une longueur prédéterminée de telle sorte que lorsque la partie d'extrémité (420) fait saillie de la première extrémité ouverte (210a) de l'alésage traversant (210) du premier montant (20) pour pincer le deuxième élément, une partie de la partie d'extrémité (420) reste dans l'alésage traversant du premier montant (20),
la partie ajustée par pression (410) et la partie d'extrémité (420) de la douille (4) sont toutes les deux de forme cylindrique, et
la partie d'extrémité (420) a un diamètre extérieur plus petit que la partie ajustée par pression (410) de la douille (4).

2. Dispositif selon la revendication 1, dans lequel la partie d'extrémité (420) de la douille (4) est revêtue pour une protection contre la rouille.

3. Dispositif selon la revendication 1, dans lequel la douille (4) a une partie intermédiaire frustoconique (430) qui connecte la partie ajustée par pression (410) et la partie d'extrémité (420).

4. Dispositif selon la revendication 1, dans lequel le deuxième montant (10) et le deuxième élément ont chacun un alésage traversant (210, 300a) et la douille (4) a un alésage à filetage femelle (40) formé dans celle-ci, et dans lequel la force pour faire saillir la partie d'extrémité (420) de la douille (4) est créée en faisant passer un boulon (310) à travers les alésages traversants (210, 300a) du deuxième montant (10) et du deuxième élément dans un sens de la première extrémité ouverte (210a) vers la deuxième extrémité ouverte (210b) de l'alésage traversant (210) du premier montant (20) et en serrant à la clé le boulon (310) pour un engagement avec l'alésage à filetage femelle (40) dans la douille (4).

5. Dispositif selon la revendication 4 comprenant en outre un mécanisme de limitation de rotation (42, 220) qui fonctionne de façon à limiter la rotation de la douille (4).

6. Dispositif selon la revendication 5, dans lequel le mécanisme de limitation de rotation (42, 220) est composé d'une partie d'extrémité non cylindrique (42) de la douille (4), qui est opposée à la partie d'extrémité (420) de la douille (4) et positionnée à l'extérieur de la deuxième extrémité ouverte (210b) de l'alésage traversant (210) du premier montant (20), et d'une saillie du premier montant (20) qui est formée à proximité de la deuxième extrémité ouverte (210b) de l'alésage traversant (210) du premier montant (20) pour stopper la rotation de la partie d'extrémité non cylindrique (42) de la douille (4).

7. Dispositif selon la revendication 1, dans lequel le deuxième montant (10), le deuxième élément, et la douille (4) ont chacun un alésage traversant (210, 300a, 40), et dans lequel la force pour faire saillir la partie d'extrémité (420) de la douille (4) est créée en faisant passer un boulon (310) à travers les alésages traversants (210, 300a, 40) du deuxième montant (10), du deuxième élément, et de la douille (4) dans un sens de la première extrémité ouverte (210a) vers la deuxième extrémité ouverte (210b) de l'alésage traversant (210) du premier montant (20) et en serrant à la clé le boulon (310) pour un engagement avec un écrou à l'extérieur de l'alésage traversant de la douille (4).

8. Dispositif selon la revendication 7, dans lequel le premier montant (20) a une saillie formée à proximité de la deuxième extrémité ouverte (210b) de l'alésage traversant (210) du premier montant (20) pour stopper la rotation de l'écrou.

9. Dispositif selon la revendication 1, dans lequel le dispositif est employé dans un alternateur d'automobile (100) pour monter l'alternateur sur un bâti (300) d'une automobile, et
dans lequel
le premier élément, auquel le premier et le deuxième montants (10, 20) sont fixés, est un châssis (2) de l'alternateur (100), et
le deuxième élément, qui est destiné à être fixé au premier élément par le dispositif, est le bâti (300) de l'automobile.

10. Dispositif selon la revendication 9, dans lequel le premier et le deuxième montants (10, 20) sont tous les deux formés de façon intégrale avec le châssis (2).
